# EUROPEAN PATENT APPLICATION

(11) **EP 3 328 017 A1**
(43) Date of publication of application: **30.05.2018**
(21) Application number: 16826991.8
(22) Date of filing: 05.01.2016
(51) Int. Cl.: H04L 29/06, H04L 29/08

(54) **PROCESSING METHOD AND DEVICE FOR ACTION IN EVENT**

(30) Priority: 23.07.2015 CN 201510437530
(71) Applicant: ZTE Corporation, Shenzhen, Guangdong 518057 (CN)
(72) Inventor: YANG, Kun, Shenzhen Guangdong 518057 (CN)
(74) Representative: Studio Torta S.p.A.
(86) International application number: PCT/CN2016/070183
(87) International publication number: WO 2017/012295

(57) **Abstract**

Provided are a method and device for processing actions in an event. The method comprises: receiving information for triggering an execution event, wherein the event comprises at least one operation object, each of the operation objects is bound to an action group, each action in the action group has the corresponding priority level and the corresponding trigger time for triggering an execution action; when a trigger time for triggering a first action in an execution action group is reached, determining whether the priority level of the first action is higher than or equal to the priority level of other actions in the action group except for the first action; if a determination result is yes, executing the first action; and if a comparison result is no, prohibiting executing the first action. By means of the present invention, the problem in the relevant art that an event-action mechanism in an AllJoyn network only supports serial operations in a time sequence is solved, and the user's experience is improved.

## Description

### TECHNICAL FIELD

The present invention relates to the field of communications, and more particularly, to a method and device for processing actions in an event.

### BACKGROUND

AllJoyn is an open source software project, which provides a general-purpose communication framework for different electronic devices. AllJoyn is a point-to-point framework based on a client/server model, is mainly used to achieve information communications crossing operation systems, crossing languages and crossing communication technologies, and is an open source framework which has a great influence in the world.

An AllJoyn network provides an event-action mechanism. The event is a signal with description information in the AllJoyn. The description information constitutes the first half of a dialogue in AllJoyn, mainly describing a phenomenon or a result corresponding to the signal to a user. In AllJoyn, the event is primarily used as a trigger source for actions. One event may correspond to at least one action, i.e., when an event occurs, the action that corresponds to this event will be triggered. The action is a method carrying the description information in the AllJoyn. The description information constitutes the latter half of the dialogue in AllJoyn, mainly describing an operation and a behavior corresponding to the method to the user. In the AllJoyn, the action is mainly used as a response to a certain signal, i.e., when a certain signal appears in a system, a corresponding operation behavior is triggered to process the signal.

At current, the event supports to trigger multiple actions asynchronously in a time sequence.

For example, if the user goes back home and opens a door, opening the door is deemed as an event, then the user may bind a corresponding action for the event of opening the door according to the needs. Now it is assumed that the user binds the following actions for the door, i.e., triggering to turn on a light and an air conditioner in a bedroom when the door is opened, and automatically turn off the air conditioner and open a heating function of a water heat automatically after 0.5 hour. However, the user may immediately have a bath or turn on the air conditioner for 1 hour in a timer mode after returning home, then the air conditioner will still be automatically turned off and the heating function of the water heater will be automatically opened after 0.5 hour. According to the event-action mechanism in the AllJoyn at current, the user can only manually cancel the two actions of automatically turning off the air conditioner and automatically opening the heating function of the water heater after 0.5 hour, or manually turning on the air conditioner for 0.5 hour in a timer mode after the air conditioner is automatically turned off after 0.5 hour, and manually closing the water heater after the water heater has been automatically opened. This trivial operation is not a good experience for the user.

There is no effective solution at current regarding the problem that the event-action mechanism of the AllJoyn network in the related art only supports serial operations in the time sequence.

### SUMMARY

The embodiments of the present invention provide a method and device for processing actions in an event, so as to at least solve the problem in the related art that the event-action mechanism of the AllJoyn network only supports the serial operation in the time sequence.

According to an aspect of the embodiments of the present invention, there is provided a method for processing actions in an event, including: receiving information for triggering execution of an event, wherein the event includes at least one operation object, each of the operation objects is bound to an action group, and each action in the action group has a corresponding priority level and a corresponding triggering time for triggering execution of the action; when reaching a triggering time for triggering execution of a first action in the action group, determining whether a priority level of the first action is higher than or equal to priority levels of other actions in the action group excluding the first action; when the determination result is yes, executing the first action; and when the comparison result is no, prohibiting to execute the first action.

Optionally, the method, before receiving the information for triggering execution of the event, further includes: creating an interface of the action group and actions in the action group according to the event provided by a home gateway; and setting priority levels of the actions in the action group and triggering time for triggering execution of the actions, wherein the priority levels are the same priority levels or different priority levels.

Optionally, the determining whether the priority level of the first action is higher than or equal to the priority levels of the other actions in the action group excluding the first action includes: when reaching a first triggering time of the first action in the action group, determining whether an action being executed at the moment of the first triggering time is the same as the first action.

Optionally, when the action being executed at the moment of the first triggering time is different from the first action, the method further includes: sorting the actions in the action group according to an order of the triggering time of the actions.

Optionally, the determining whether the priority level of the first action is higher than or equal to the priority levels of the other actions in the action group excluding the first action includes: querying, in the sorted actions, whether a second action which is the same as the first action exists in actions that are not triggered to be executed subsequently to the first action; and when the second action which is the same as the first action exists, determining whether the priority level of the first action is higher than or equal to a priority level of the second action.

Optionally, the second action includes at least one action.

According to another aspect of the embodiments of the present invention, there is provided a device for processing actions in an event, including: a receiving module configured to receive information for triggering execution of an event, wherein the event includes at least one operation object, each of the operation objects is bound to an action group, and each action in the action group has a corresponding priority level and a corresponding triggering time for triggering execution of the action; a determining module configured to, when reaching a triggering time for triggering execution of a first action in the action group, determine whether a priority level of the first action is higher than or equal to priority levels of other actions in the action group excluding the first action; and an execution module configured to, when the determination result is yes, execute the first action; and when the comparison result is no, prohibit to execute the first action.

Optionally, the device, before receiving the information for triggering execution of the event, further includes: a creation module configured to create an interface of the action group and actions in the action group according to the event provided by a home gateway; and a setting module configured to set priority levels of the actions in the action group and triggering time for triggering execution of the actions, wherein the priority levels are the same priority level or different priority levels.

Optionally, the determining module includes: a first determining unit configured to, when reaching a first triggering time of the first action in the action group, determine whether an action being executed at the moment of the first triggering time is the same as the first action.

Optionally, when the action being executed at the moment of the first triggering time is different from the first action, the device further includes: a sorting module configured to sort the actions in the action group according to an order of the triggering time of the actions.

Optionally, the determining module includes: a querying unit configured to query, in the sorted actions, whether a second action which is the same as the first action exists in actions that are not triggered to be executed subsequently to the first action; and a second determining unit configured to, when the second action which is the same as the first action exists, determine whether the priority level of the first action is higher than or equal to a priority level of the second action.

In the embodiments of the present invention, after the information for triggering execution of the event is received, for the action group of the operation object in the event, it is determined whether the priority level of the first action is higher than the priority levels of the other actions in the action group excluding the first action when reaching the triggering time for triggering execution of the first action in the action group; and when the determination result is yes, the first action is executed; and when the determination result is no, it is prohibited to execute the first action. That is to say, for multiple actions of the same operation object, which one of the multiple actions is to be executed will be determined according to the priority levels of the multiple actions, instead of performing the multiple actions repeatedly, thereby solving the problem that the event-action mechanism of the AllJoyn network in the related art only supports serial operations in the time sequence, and improving the user experience.

### BRIEF DESCRIPTION OF THE DRAWINGS

The drawings illustrated here serve to provide a further understanding of the invention and constitute a part of the application, and the illustrative embodiments of the invention and together with the description thereof serve to explain the invention, and do not constitute inappropriate definition to the invention. In the drawings:
Fig. 1 is a flow chart of a method for processing actions in an event according to an embodiment of the present invention;
Fig. 2 is a structural block diagram of a device for processing actions in an event according to an embodiment of the present invention;
Fig. 3 is an optional structural block diagram I of the device for processing actions in an event according to the embodiment of the present invention;
Fig. 4 is an optional structural block diagram II of the device for processing actions in an event according to the embodiment of the present invention;
Fig. 5 is an optional structural block diagram III of the device for processing actions in an event according to the embodiment of the present invention; and
Fig. 6 is a flow chart of an event-action priority processing method in an AllJoyn network according to an embodiment of the present invention.

### DETAILED DESCRIPTION

The present invention will be explained in detail with reference to the drawings and embodiments hereinafter. It should be noted that, in case of no conflict, the embodiments in the present application and the features in the embodiments may be combined with each other.

It should be noted that the terms "first", "second" and the like in the description, claims and the above drawings of the present invention are used to distinguish similar objects, and are not necessarily used to describe a specific sequence or a chronological order.

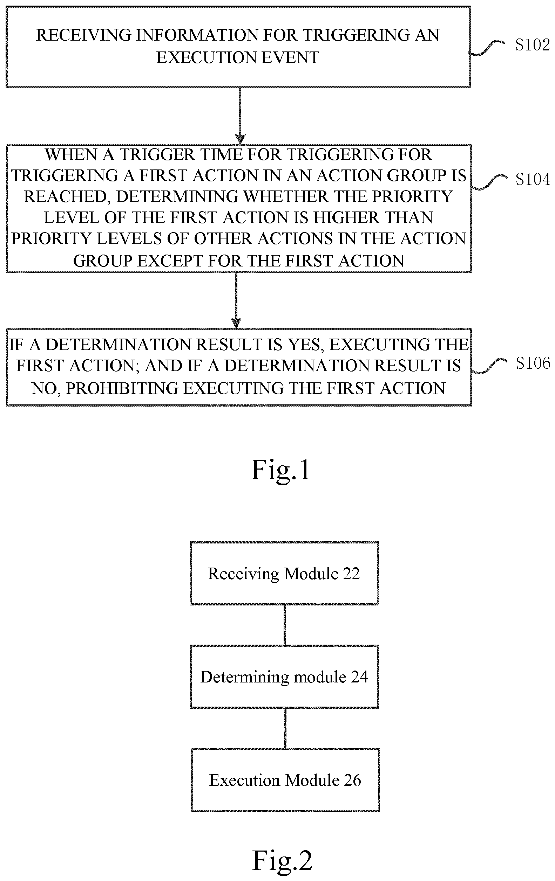

In this embodiment, a method for processing actions in an event is provided. Fig. 1 is a flow chart of the method for processing actions in an event according to the embodiment of the present invention. As shown in Fig. 1, the method includes the following steps.

In step S102, information for triggering execution of an event is received. The event includes at least one operation object, each of the operation objects is bound to an action group, and each action in the action group has a corresponding priority level and a corresponding triggering time for triggering execution of the action.

In step S104, when reaching a triggering time for triggering execution of a first action in the action group, it is determined whether a priority level of the first action is higher than priority levels of other actions in the action group excluding the first action.

In step S106, when the determination result is yes, the first action is executed; and when the comparison result is no, it is prohibited to execute the first action.

Through the above-mentioned step S102 to step S106, after the information for triggering execution of the event is received, for the action group of the operation object in the event, it is determined whether the priority level of the first action is higher than the priority levels of the other actions in the action group excluding the first action when reaching the triggering time for triggering execution of the first action in the action group; and when the result is yes through determination, the first action is executed; and when the result is no through determination, the first action is forbidden to be executed. That is to say, for multiple actions of the same one operation object, which one of the multiple actions is to be executed will be determined according to the priority levels of the multiple actions without performing the multiple actions repeatedly, thereby solving the problem that the event-action mechanism of the AllJoyn network in the related art only supports serial operations in the time sequence, and improving the user experience.

It should be noted that the event involved in the embodiment is an event in the AllJoyn network optionally.

Before the step S102 of receiving the information for triggering execution of the event in the embodiment, the method of the embodiment may further include the following steps.

In step S11, an interface of the action group and actions in the action group are created according to an event provided by a home gateway.

In step S12, priority levels of the actions in the action group and triggering time for triggering execution of the actions are set, wherein the priority levels are the same priority level or different priority levels.

It can be known from steps S11 and S12 that the creation of actions involved in the embodiment is based on the interface provided by the home gateway.

In an optional implementation manner of the embodiment, the determining whether the priority level of the first action is higher than or equal to the priority levels of the other actions in the action group excluding the first action involved in step S104 of the embodiment may be achieved through the following way: when reaching first triggering time of the first action in the action group, determining whether an action being executed at the moment of the first triggering time is the same as the first action.

That is to say, in the embodiment, when reaching the first triggering time of one action in the action group, it needs to firstly determine whether the action being currently executed is the same as the action (first action) whose triggering time is reached, should be executed, but has not been executed yet. If the two actions are the same, then the action which needs to be executed, but has not been executed yet, is forbidden to be executed because there is already the same action being currently executed and it is unnecessary to execute the action.

Through this way, it is able to effectively determine whether to execute the action that needs to be executed at current but has not been executed, i.e., to effectively solve the issue that for one action that needs to be executed but has not been executed yet, even if the same action has been completely executed before, this action will be executed again. The complete execution will be explained through an application scenario. For example, if an air conditioner in a bedroom has been turned on and off, then the action has been completely executed. That is, it is set by a system that the air conditioner in the bedroom is turned on immediately after the door is opened and then turned off after 0.5 hour, while a user resets to turn on the air conditioner again after the door is opened for 2 hours, and then turned off after the door is opened for 3 hours. It can be seen that the air conditioner in the bedroom can be controlled more intelligently through the above way of only comparing the action being performed currently with the action whose triggering time is reached but has not been executed yet.

In an optional implementation manner of the embodiment, when the action being performed at the moment of the first triggering time is determined to be different from the first action in the foregoing manner, the method of the embodiment may further include: sorting the actions in the action group according to an order of the triggering time of the actions.

On the basis of the action group that is sorted according to the triggering time, in an optional implementation manner of the embodiment, the determining whether the priority level of the first action is higher than the priority levels of the other actions in the action group excluding the first action involved in step S104 of the embodiment may be achieved through the following way.

In step S21, it is queried in the sorted actions whether a second action which is the same as the first action exists in actions that are not triggered to be executed subsequently to the first action.

In step S22, when the second action which is the same as the first action exists, it is determined whether the priority level of the first action is higher than or equal to a priority level of the second action.

It can be known through step S22 and step S21 that, when judging the priority levels of the same actions, the actions in the action group may be sorted according to the triggering time in advance, then every time the triggering time of one action is reached, the priority level of a subsequent action which is the same as said one action is acquired, and it is determined whether the current action is executed according to the comparison result of the priority levels.

The application scenario involved in the above-mentioned embodiment may be a home environment, and the operation object of the event may include: a light in a bedroom, an air conditioner in the bedroom, and a water heater in a bathroom. The action group for the air conditioner in the bedroom includes: turning on, and turning off in 1200s (seconds); correspondingly, the two actions have priority levels, and the information for triggering the event is opening the door. After a user opens the door, the user also immediately sets an action of turning off the air conditioner in the bedroom in 600 seconds, and sets a priority level of this action to be higher than the priority level of the action of turning off in 1200 seconds. Therefore, after 600 seconds, the system judges whether the priority level of the current action of turning off the air conditioner in the bedroom is higher than the priority level of the subsequent action of turning off the air conditioner in the bedroom; when the determination result is yes, the current action is executed, and the subsequent corresponding action is forbidden, i.e., the same action will not be executed subsequently; and when the determination result is no, then the current action of turning off the air conditioner in the bedroom is forbidden, and the same action will be executed subsequently after waiting for a certain time. That is, in the embodiment, the user can implement priority processing on multiple actions of one operation object, so that the user can enjoy services of customized life by using simple operations, thus saving complicated and trivial device operation steps.

It should be noted that, the second action involved in the embodiment may be one action or multiple actions, i.e., the same actions in one action group may be two or more than two.

Through the above description of the implementation manners, those skilled in the art can clearly understand that the method according to the above embodiments may be implemented by software and a necessary universal hardware platform, and may also be implemented by hardware. In many cases, the former is a better implementation manner. Based on such understanding, the essence of the technical solutions of the present invention, or the part contributing to the prior art, may be embodied in the form of a software product which is stored in a storage medium (such as an ROM/RAM, a magnetic disk, an optical disk) including a number of instructions such that a computer device (which may be a mobile phone, a computer, a server, or a network device, etc.) performs the method described in each of the embodiments of the present invention.

In this embodiment, there is also provided a device for processing actions in an event. The device used for implementing the foregoing embodiments and the preferred implementation manners, and those which have been described will not be elaborated again. As used below, the term "module" may be a combination of software and/or hardware that can achieve a predetermined function. Although the device described in the following embodiments is preferably implemented by software, the implementation of hardware or a combination of software and hardware is also possible and contemplated.

Fig. 2 is a structural block diagram of a device for processing actions in an event according to an embodiment of the present invention. As shown in Fig. 2, the device includes: a receiving module 22 configured to receive information for triggering execution of an event, wherein the event includes at least one operation object, each of the operation objects is bound to an action group, and each action in the action group has a corresponding priority level and a corresponding triggering time for triggering execution of the action; a determining module 24 coupled with the receiving module 22 and configured to, when reaching a triggering time for triggering execution of a first action in the action group, determine whether a priority level of the first action is higher than or equal to priority levels of other actions in the action group excluding the first action; and an execution module 26 coupled with the determining module 24 and configured to, when the determination result is yes, execute the first action; and when the determination result is no, forbid executing the first action.

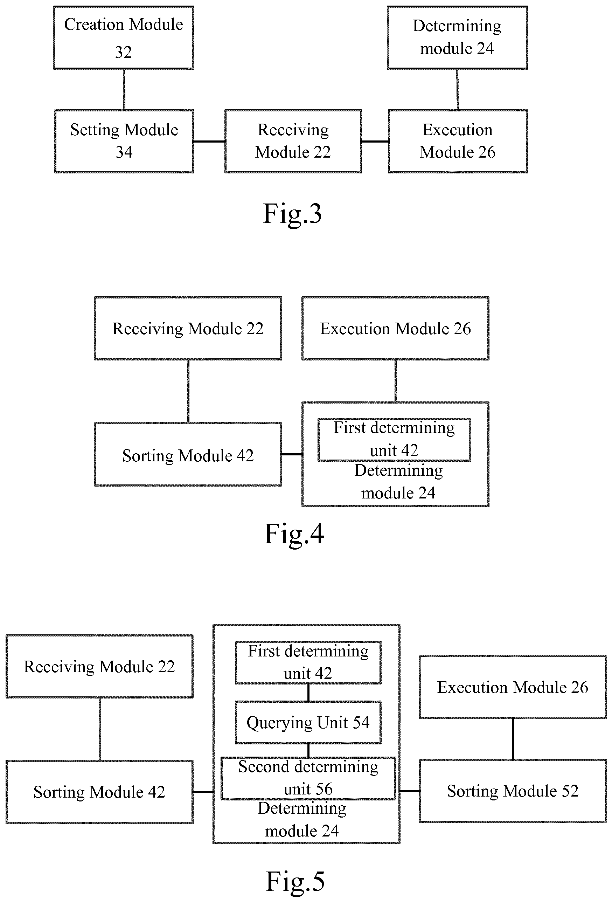

Fig. 3 is an optional structural block diagram I of the device for processing actions in an event according to the embodiment of the present invention. As shown in Fig. 3, before receiving the information for triggering execution of the event, the device further includes: a creation module 32 coupled with a setting module 34 and configured to create an interface of the action group and actions in the action group according to an event provided by a home gateway; and the setting module 34 coupled with the receiving module 22 and configured to set priority levels of the actions in the action group and triggering time for triggering execution of the actions, wherein the priority levels are the same priority level or different priority levels.

Fig. 4 is an optional structural block diagram II of the device for processing actions in an event according to the embodiment of the present invention. As shown in Fig. 4, the determining module includes: a first determining unit 42 configured to, when reaching first triggering time of the first action in the action group, determine whether an action being executed at the moment of the first triggering time is the same as the first action.

Fig. 5 is an optional structural block diagram III of the device for processing actions in an event according to the embodiment of the present invention. As shown in Fig. 5, when the action being executed at the moment of the first triggering time is different from the first action, the device further includes: a sorting module 52 coupled with the determining module 24 and configured to sort the actions in the action group according to the triggering time sequence of the actions. The determining module 24 further includes: a querying unit 54 configured to query, in the sorted actions, whether a second action which is the same as the first action exists in actions that are not triggered to be executed subsequently to the first action; and a second determining unit 56 coupled with the sorting unit 54 and configured to, when the second action which is the same as the first action exists, determine whether the priority level of the first action is higher than or equal to a priority level of the second action.

It should be noted that the second action involved in the embodiment includes at least one action.

The present invention is illustrated by optional embodiments of the embodiment hereinafter.

The technical problem to be solved by the present invention is to provide a processing method for an event-action priority in an AllJoyn network, which may include the following steps.

In step S202, information that an event occurs is received.

In step S204, an action binding to the event and a corresponding priority of the action are queried.

In step S206, the priority of the action is compared with a priority of an action in a time sequence of an operation object.

In step S208, when the priority of the action is higher than or equal to that of the action in the time sequence of the operation object, the action is executed; and when the priority of the action is lower than that of the action in the time sequence of the operation object, the action is cancelled.

One event is bound to at least one action, each action corresponds to one priority level, and the priority level is a predefined level value.

In the optional embodiment, the method of the embodiment, before receiving the information that the event occurs, further includes: binding the event to an action group, and setting a corresponding priority level for each action in the action group.

The setting corresponding priority level for the action specifically includes the following steps.

In step S31, each action in the action group is created according to an action group creation interface for creating a corresponding action group on the basis of the event which is provided by a home gateway.

In step S32, a priority level is set for each action.

In step S33, the action of each operation object is recorded.

Through the optional embodiment, the problem that the event-action mechanism of the AllJoyn network in the related art only supports serial operations in the time sequence can be solved.

The optional embodiment is described in detail hereinafter through the specific embodiments of the optional embodiment.

### First embodiment

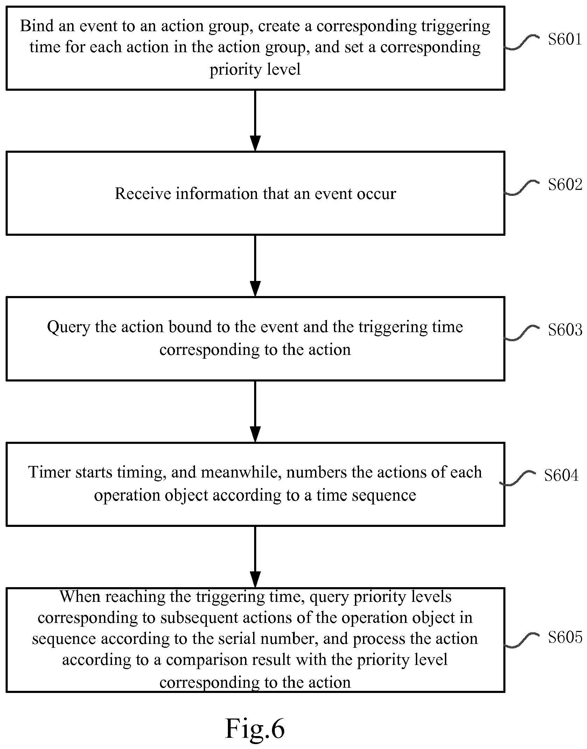

The optional first embodiment provides a processing method for an event-action priority in an AllJoyn network. Fig. 6 is a flow chart of the processing method for an event-action priority in an AllJoyn network according to the optional embodiment of the present invention.

As shown in Fig. 6, the method includes the following steps.

In step S601, an event and an action group are bound, and a corresponding priority level is set for each action in the action group, wherein the priority level is a predefined level value. In the embodiment, the setting the corresponding priority level for the action specifically includes: creating each action in the action group according to an action group creation interface for creating the corresponding action group based on the event provided by a home gateway; and setting a triggering time for each action, and setting a priority level for each action. One event is bound to at least one action, and each action corresponds to one triggering time and one priority level.

Because the optional embodiment is implemented on the basis of the home gateway, in order to implement the functions mentioned in the embodiment, the gateway needs to provide a creation interface for creating a corresponding action group on the basis of the event, and parameters of the action group creation interface are as shown in Table 1. The action[] has a corresponding relationship with the triggering time[] and the priority level[], and the action, the triggering time and the priority level having the same subscript position are corresponding to each other. That is, the action under the corresponding subscript is triggered at the triggering time under the corresponding subscript according to the priority level under the corresponding subscript.

**Table 1**

| Action group creation interface | Parameter |
|---|---|
| Create Action Group createActionsGroup | Trigger Event triggerEvent |
| | Action actions[] |
| | Triggering Time timers[] |
| | Priority priorities[] |

A created structure is as shown in Table 2.

**Table 2**

| Trigger event | Action column | | | | Triggering time column | | | | Priority level column | | | |
|---|---|---|---|---|---|---|---|---|---|---|---|---|
| Event A | Action A | Action B | Action C | Action D | A 0s | B 0s | C 1800s | D 1800s | A 3 | B 3 | C 3 | D 3 |
| Open door | Turn on light in bedroom | Turn on air conditioner in bedroom | Turn off air conditioner in bedroom | Open water heater in bathroom | Relative time | Relative time | Relative time | Relative time | Preset level | Preset level | Preset level | Preset level |

In step S602, information that an event occurs is received.

In step S603, an action bound to the event and a triggering time corresponding to the action are queried.

In step S604, a timer starts timing, and meanwhile, the actions of each operation object are numbered according to a time sequence.

Because the embodiment is implemented on the basis of the home gateway, in order to implement the functions mentioned in the embodiment, the gateway needs to provide a function of recording the actions of each operation object according to a time sequence, including storing the actions that have been completed lately and the actions that has not been completed yet, and removing the actions that have been completed early and the actions that are canceled. The parameters of the action recording function are as shown in Table 3. The sequence number has a corresponding relationship with the action and the priority level, and the sequence number is corresponding to the action and the priority level under the same subscript position. That is, when the action under the corresponding subscript will be triggered, the action under the corresponding subscript is processed according to the priority level under the corresponding subscript.

**Table 3**

| Action recording function | Parameter |
|---|---|
| actionSubject (Action recording function) | serialNumber (serial number) |
| | Action (action) |
| | Priority (priority) |

A recorded structure is as shown in Table 4.

**Table 4**

| Operation object | Serial number | Action | Priority |
|---|---|---|---|
| Light in bedroom | 1 | Turn on | 3 |
| Air conditioner in bedroom | 1 | Turn on | 3 |
| | 2 | Turn off in 900s | 3 |
| | 3 | Turn off in 2700s | 2 |
| Water heater in bathroom | 1 | Open in 900s | 3 |
| | 2 | Close | 2 |

In step S605, when reaching the triggering time, priority levels corresponding to subsequent actions of the operation object are queried in sequence according to the serial numbers, and are compared with the priority level corresponding to the action.

When the priority level corresponding to the action is higher than or equal to the priority levels corresponding to the subsequent actions, the action is executed, and an action record is updated. When the priority level corresponding to the action is lower than the priority levels corresponding to the subsequent actions, the action is cancelled, and the action record is updated.

An updated structure is as shown in Table 5.

**Table 5**

| Operation object | Serial number | Action | Priority |
|---|---|---|---|
| Light in bedroom | 1 | Turn on | 3 |
| Air conditioner in bedroom | 1 | Turn on | 3 |
| | 3 | Turn off in 1800s | 2 |
| | 2 | Close | 2 |

According to the optional embodiment, one action group with priority levels is created for each event. The user may set a corresponding priority level for each action bound to the event according to the needs thereof. Then, the gateway may process the actions according to the corresponding priority level of each action. In this way, the user can process the multiple actions of the operation object according to the priorities.

### Second embodiment

The optional second embodiment provides a processing method for an event-action priority in an AllJoyn network, which includes the following steps.
(1) A smart device is connected to a gateway;
(2) the gateway exposures an event and an action interface to a user;
(3) the user invokes an interface for creating an action group on the basis of the event by the gateway, creates a corresponding action group, and sets a corresponding priority level for each action;
(4) the rule is added into a rule engine;
(5) a timer starts timing, and the gateway records a corresponding action; and
(6) when reaching a triggering time, the gateway processes the corresponding action according to the corresponding priority level.

It can be seen from the implementation method of the optional second embodiment that, regarding the event-action mechanism of the AllJoyn in the related art, the function for the user to use the priority processing to selectively execute operation actions in the time sequence can be implemented. That is, the method according to the optional second embodiment has the following beneficial effects.
(1) Improved user experience: the user can implement priority processing on multiple actions of one operation object, so that the user can enjoy services of customized life by using simple operations, thus saving complicated and trivial device operation steps.
(2) More flexible operation: the optional embodiment provides priority processing on the actions of the operation object, so that the user has more flexible ways of changing under changeable life scenarios, thus preferably meeting the diversity needs of the user.
(3) Economic and energy saving: a priority processing mechanism actually provides the user with an execution basis for each service, so that the useless device operation for the user is canceled, which can reduce energy consumption.
(4) High implementability: the optional embodiment is based on a home gateway system, and is feasible.

Optionally, the specific examples in the embodiment may refer to the examples described in the above embodiments and the optional implementation manners, and will not be elaborated in the embodiment.

It will be apparent to those skilled in the art that the above-described modules or steps of the present invention may be implemented by a general purpose computing device which may be focused on a single computing device or distributed over a plurality of computing devices, which may optionally be implemented by a program code executable by the computing device, so that they may be stored in a storage device by the computing device and, in some cases, the steps shown or described may be performed in a sequence different from here; or they are separately made into individual integrated circuit module, or multiple modules or steps among them are made into a single integrated circuit module. Thus, the present invention is not limited to any particular combination of hardware and software.

Those described above are merely preferred embodiments of the present invention, but are not intended to limit the protection scope of the present invention. The present invention may have various modification and changes for those skilled in the art. Any modifications, equivalent substitutions and improvements made without departing from the spirit and principle of the present invention shall all fall within the protection scope of the present invention.

### INDUSTRIAL APPLICABILITY

During the implementation of the embodiments of the present invention, after the information for triggering execution of the event is received, for the action group of the operation objects in the event, it is judged whether the priority level of the first action is higher than the priority levels of the other actions in the action group excluding the first action when reaching the triggering time for triggering execution of a first action in the action group; and when the result is yes through judgment, the first action is executed; and when the result is no through judgment, the first action is forbidden to be executed. That is to say, for multiple actions of the same operation object, which of the multiple actions is to be executed will be determined according to the priority levels of the multiple actions without performing the multiple actions repeatedly, thereby solving the problem that the event-action mechanism of the AllJoyn network in the related art only supports serial operations in the time sequence, and improving the user experience.

## Claims

1. A method for processing actions in an event, comprising:
receiving information for triggering execution of an event, wherein the event comprises at least one operation object, each of the operation objects is bound to one action group, and each action in the action group has a corresponding priority level and a corresponding triggering time for triggering execution of the action;
when reaching a triggering time for triggering execution of a first action in the action group, determining whether a priority level of the first action is higher than or equal to priority levels of other actions in the action group excluding the first action; and
when the determination result is yes, executing the first action; and when the determination result is no, prohibiting to execute the first action.

2. The method according to claim 1, wherein the method, before receiving the information for triggering execution of the event, further comprises:
creating an interface of the action group and actions in the action group according to the event provided by a home gateway; and
setting priority levels of the actions in the action group and triggering time for triggering execution of the actions, wherein the priority levels are the same priority level or different priority levels.

3. The method according to claim 1, wherein the determining whether the priority level of the first action is higher than or equal to the priority levels of the other actions in the action group excluding the first action comprises:
when reaching first triggering time of the first action in the action group, determining whether an action being executed at the moment of the first triggering time is the same as the first action.

4. The method according to claim 3, wherein when the action being executed at the moment of the first triggering time is different from the first action, the method further comprises:
sorting the actions in the action group according to an order of the triggering time of the actions.

5. The method according to claim 4, wherein the determining whether the priority level of the first action is higher than or equal to the priority levels of the other actions in the action group excluding the first action comprises:
querying, in the sorted actions, whether a second action which is the same as the first action exists in actions that are not triggered to be executed subsequently to the first action; and
when the second action which is the same as the first action exists, determining whether the priority level of the first action is higher than or equal to a priority level of the second action.

6. The method according to claim 5, wherein the second action comprises at least one action.

7. A device for processing actions in an event, comprising:
a receiving module configured to receive information for triggering execution of an event, wherein the event comprises at least one operation object, each of the operation objects is bound to an action group, and each action in the action group has a corresponding priority level and a corresponding triggering time for triggering execution of the action;
a determining module configured to, when reaching a triggering time for triggering execution of a first action in the action group, determine whether a priority level of the first action is higher than or equal to priority levels of other actions in the action group excluding the first action; and
an execution module configured to, when the determination result is yes, execute the first action; and when the determination result is no, prohibit to execute the first action.

8. The device according to claim 7, wherein the device, before the receiving the information for triggering execution of the event, further comprises:
a creation module configured to create an interface of the action group and actions in the action group according to the event provided by a home gateway; and
a setting module configured to set priority levels of the actions in the action group and triggering time for triggering execution of the actions, wherein the priority levels are the same priority level or different priority levels.

9. The device according to claim 7, wherein the determining module comprises:
a first determining unit configured to, when reaching first triggering time of the first action in the action group, determine whether an action being executed at the moment of the first triggering time is the same as the first action.

10. The device according to claim 9, wherein, when the action being executed at the moment of the first triggering time is different from the first action, the device further comprises:
a sorting module configured to sort the actions in the action group according to an order of the triggering time of the actions.

11. The device according to claim 10, wherein the determining module comprises:
a querying unit configured to query, in the sorted actions, whether a second action which is the same as the first action exists in actions that are not triggered to be executed subsequently to the first action; and
a second determining unit configured to, when the second action which is the same as the first action exists, determine whether the priority level of the first action is higher than or equal to a priority level of the second action.
